# EUROPEAN PATENT SPECIFICATION

(11) **EP 3 702 021 B1**
(45) Date of publication and mention of the grant of the patent: **26.03.2025**
(21) Application number: 18870949.7
(22) Date of filing: 20.09.2018
(51) Int. Cl.: B01D 71/68, B01D 69/08, B01D 71/44, D01F 6/76, H01M 8/04291, H01M 8/10, B01D 67/00, B01D 69/02

(54) **MANUFACTURING METHOD FOR POLYPHENYL SULFONE HOLLOW-FIBER MEMBRANE FOR USE IN HUMIDIFICATION FILM**
HERSTELLUNGSVERFAHREN FÜR POLYPHENYLSULFON-HOHLFASERMEMBRAN ZUR VERWENDUNG IN EINEM BEFEUCHTUNGSFILM
PROCÉDÉ DE FABRICATION DE MEMBRANE CAPILLAIRE DE POLYPHÉNYLSULFONE POUR FILM HUMIDIFIANT

(30) Priority: 27.10.2017 JP 2017208226
(43) Date of publication of application: 02.09.2020
(73) Proprietor: NOK Corporation, Tokyo 105-8585 (JP)
(72) Inventor: WATANABE, Kensuke, Kikugawa-shi Shizuoka 437-1507 (JP); SATO, Takatoshi, Kikugawa-shi Shizuoka 437-1507 (JP)
(74) Representative: Kraus & Lederer PartGmbB
(86) International application number: PCT/JP2018/034724
(87) International publication number: WO 2019/082562

(56) References cited:
- EP-A1- 3 815 773
- WO-A1-2017/043233
- WO-A1-95/33549
- JP-A- 2004 290 751
- JP-A- 2006 255 502
- JP-A- 2011 067 812
- JP-A- H0 549 884
- JP-A- H0 739 735
- JP-A- H01 139 812
- JP-A- H03 193 645
- JP-A- H10 272 343
- JP-A- S63 258 954
- JP-B2- 5 906 665
- US-A1- 2008 000 828
- US-A1- 2015 048 533
- SIAVASH DARVISHMANESH ET AL: "Preparation of solvent stable polyphenylsulfone hollow fiber nanofiltration membranes", JOURNAL OF MEMBRANE SCIENCE, ELSEVIER BV, NL, vol. 384, no. 1, 3 September 2011 (2011-09-03), pages 89 - 96, XP028319562, ISSN: 0376-7388, [retrieved on 20110912], DOI: 10.1016/J.MEMSCI.2011.09.003

## Description

### TECHNICAL FIELD

The present invention relates to a method for producing a polyphenylsulfone hollow fiber membrane for humidifying membranes.

### BACKGROUND ART

Solid polymer fuel cells require devices for humidifying a fuel gas, such as hydrogen, and an oxidant gas, such as oxygen, and supplying these gases. As a device for humidifying such gases, a device using a water vapor permeable membrane is used; in particular, a hollow fiber membrane system is often used. This system has many advantages in that it is maintenance-free and does not require a power source for driving. This is, for example, a system that flows a gas containing water vapor from the outside of the membrane, and selectively allows the water vapor in the gas to pass into the inside of the hollow fiber membrane, thereby humidifying the gas passing through the hollow part of the hollow fiber membrane.

When fuel cell electrolyte membranes are operated at a low water content, a reduction in power generation efficiency and catalyst degradation may occur; thus, a humidifier is used for water control. Therefore, in a humidifier for fuel cells, only water discharged from the fuel cell is collected by the humidifier and returned to the fuel cell again; thus, the humidifier is preferably one in which the humidification amount increases in proportion to the amount of water supplied.

However, in conventional humidifying membranes, the relationship between the humidity (water content) of the atmosphere in which water is supplied and humidification amount largely deviated downward from the linear relationship, and there was a problem that water control was difficult when the operating conditions were changed. In addition, when dry air at 100°C or higher was supplied to the humidifying membrane, there was a phenomenon in which the humidification performance decreased due to segregation of hydrophilic polymers contained in the membrane and the progress of the crosslinking reaction.

When performance degradation occurs due to such use, it is necessary to use humidifiers with high initial performance in consideration of the performance degradation; however, there was a possibility that dew condensation (plugging) occurred in the stack during initial operation of such humidifiers.

Patent Document 1 proposes a water vapor permeable membrane in which a hydrophilic polymer in the membrane is crosslinked using a crosslinking agent. However, when such a crosslinking agent is used, there is a problem in suppressing reduction in humidification performance when dry air at 100°C or higher is supplied. Further, there is a concern about contamination by the crosslinking agent.

The present applicant has proposed a water vapor permeable membrane obtained by coating a porous support made of polyetherimide with a hydrophilic polymer to form a thin film, followed by crosslinking (Patent Document 2). However, polyetherimide has a problem in hydrolysis resistance, and may be hydrolyzed, for example, when used as a humidifying membrane in an atmosphere at a temperature of 80°C and a relative humidity of 100%.

The present applicant has further proposed a water vapor permeable membrane comprising a porous polyphenylsulfone hollow fiber membrane obtained by dry-wet spinning of a spinning dope comprising polyphenylsulfone resin and a water-soluble organic solvent solution of hydrophilic polyvinylpyrrolidone using water as a core liquid (Patent Documents 3 to 4). Of these, in Patent Document 4, 5 to 30 parts by weight of hydrophilic polyvinylpyrrolidone is used based on 100 parts by weight of polyphenylsulfone resin, whereby when the membrane is installed and used in an atmosphere, for example, with a high temperature condition at about 80 to 140°C and a low humidity condition at a relative humidity (RH) of 0 to 30%, it has an effect for suppressing a decrease in membrane performance, such as water vapor permeability, tensile strength at break, and tensile elongation at break. Related aspects on polyphenylsulfone hollow fiber membranes are disclosed in WO 2017/043233 A1, JP 5906665 B2, JP H07 39735 A, JP H10-272343 A, JP H05-49884 A, JP S63-258954 A and EP 3 915 773 A1 (which is a document under Article 54(3) EPC).

These patent documents do not focus on the relationship between supply humidity and humidification amount, and no description is found in the specifications thereof.

### PRIOR ART DOCUMENTS

### PATENT DOCUMENTS

Patent Document 1 : JP-A-2002-100384
Patent Document 2 : JP-A-2002-257388
Patent Document 3 : JP-A-2004-290751
Patent Document 4 : JP-A-2006-255502

### OUTLINE OF THE INVENTION

### PROBLEM TO BE SOLVED BY THE INVENTION

An object of the present invention is to provide a method for producing a polyphenylsulfone hollow fiber membrane for humidifying membranes, wherein the hollow fiber membrane has high water permeability, and has, when used as a humidifying membrane, a linear relationship between supply humidity and humidification amount.

### MEANS FOR SOLVING THE PROBLEM

The above object of the present invention can be achieved by a method as defined in the appended claim, comprising subjecting a hollow fiber membrane to a crosslinking treatment by heating at 160 to 180°C for 5 to 12 hours, wherein the hollow fiber membrane is obtained by a wet spinning method or a dry-wet spinning method, preferably by a dry-wet spinning method, using a spinning dope comprising polyphenylsulfone, hydrophilic polyvinylpyrrolidone, and a water-soluble organic solvent solution.

### EFFECT OF THE INVENTION

The method for producing a polyphenylsulfone hollow fiber membrane according to the present invention has the following excellent effects. That is, the producing method of the present invention can provide a humidifying membrane that suppresses segregation and crosslinking of hydrophilic polymers associated with the operation of the humidifying membrane, and that prevents the deterioration of humidification performance due to the operation. In addition, the producing method of the present invention can produce a polyphenylsulfone hollow fiber membrane for humidifying membranes, wherein the hollow fiber membrane has high water permeability, and has, when used as a crosslinked humidifying membrane, a linear relationship between water vapor supply humidity and humidification amount. The obtained hollow fiber membrane is effectively used, for example, as a humidifying membrane for fuel cells.

### BRIEF DESCRIPTION OF DRAWINGS

Fig. 1: A graph showing the relationship between Wet-In relative humidity and initial water vapor permeability coefficient for the polyphenylsulfone hollow fiber membranes obtained in the Example **(●)** and Comparative Example 1 (■).
Fig. 2: A graph showing the relationship between Wet-In relative humidity and initial humidification performance ratio for the polyphenylsulfone hollow fiber membranes obtained in the Example **(●)** and Comparative Example 1 (■).

### EMBODIMENTS FOR CARRYING OUT THE INVENTION

Polyphenylsulfone resin refers to one having a repeating unit represented by the following formula: 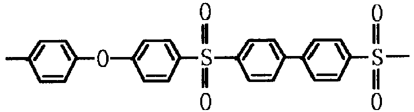 that is, one having biphenylene group and no isopropylidene group. In practice, commercial products, such as produced by Solvay Specialty Polymers, can be used as they are.

The spinning dope comprising polyphenylsulfone as a film-forming component is prepared by compounding polyphenylsulfone with a water-soluble organic solvent of hydrophilic polyvinylpyrrolidone. Examples of the water-soluble organic solvent include aprotic polar solvents, such as dimethylacetamide [DMAc], dimethylformamide [DMF], N-methyl-2-pyrrolidone [NMP], and dimethylsulfoxide [DMSO].

The spinning dope used is one having a compounding ratio in which polyphenylsulfone accounts for about 17 to 23 wt.%, preferably about 19 to 22 wt.%, and hydrophilic polyvinylpyrrolidone having various molecular weights accounts for about 8 to 20 wt.%, preferably about 11 to 18 wt.%. If hydrophilic polyvinylpyrrolidone is used at a ratio less than this range, water vapor permeability decreases. In contrast, if hydrophilic polyvinylpyrrolidone is used at a ratio higher than this range, the film-forming solution becomes unstable, so that spinning cannot be performed.

The formation of a polyphenylsulfone hollow fiber membrane using such a spinning dope is performed by a wet spinning method or a dry-wet spinning method, preferably a dry-wet spinning method. In this case, water, a mixed solvent of water and a water-soluble organic solvent, specifically an aprotic polar solvent mentioned above, or the like is used as the core liquid. The spun hollow fiber product is coagulated in an aqueous coagulation bath (gelation bath), typified by water, and then washed in pressurized water at 121°C for 1-5 hours. Subsequently, a heat treatment is performed in a constant temperature bath at about 160 to 180°C, preferably 165 to 175°C, for about 5 to 12 hours, preferably 6 to 10 hours. When the heating temperature is lower than the above range, or when the heating time is shorter than the above range, the desired humidification performance cannot be obtained.

### EXAMPLES

The following describes the present invention with reference to Examples.

### Example

(1) An uniform spinning dope at room temperature comprising 20 parts by weight of polyphenylsulfone (RADEL R-5000, produced by Solvay Specialty Polymers), 15 parts by weight of hydrophilic polyvinylpyrrolidone (K-30G, produced by ISP), and 65 parts by weight of dimethylacetamide was discharged from a double annular nozzle into a water coagulation bath by a dry-wet spinning method, while using water as the core liquid. Then, washing was performed in pressurized water at 121°C for 1 hour, followed by heating in a constant temperature bath at 170°C for 8 hours to perform a crosslinking treatment, thereby obtaining a porous polyphenylsulfone hollow fiber membrane having an outer diameter of 1.0 mm, an inner diameter of 0.7 mm, and a pore diameter of 2.2 nm. Here, the pore diameter indicates the Knudsen diffusion average diameter based on the number standard of pores measured using a nano-perm porometer (produced by Seika Digital Image).

The obtained hollow fiber membrane was inserted into a SUS tube mini-module having an inner diameter of 4 mm, both ends of the mini-module were sealed with epoxy resin, and a hollow fiber membrane module for measurement was produced so that the effective length of the hollow fiber membrane was 170 mm. While supplying dry air at a temperature of 80°C and a relative humidity of 2% from one end of the hollow fiber membrane module to the hollow part of the hollow fiber membrane at a linear velocity of 13 m/s, water vapor at a temperature of 80°C was supplied to the outer surface of the hollow fiber membrane at a linear velocity of 3 m/sec. Here, the relative humidity of the supplied water vapor was 20%, 40%, 60%, 80% or 90%, and the amount of water permeating from the outside to the inside of the hollow fiber was determined. The determined amount of permeating water was divided by the hollow fiber inner surface area and the water vapor partial pressure difference (pressure difference between the inner and outer sides of the hollow fiber) to determine the water vapor permeability coefficient (velocity).

### Comparative Example 1

In the Example, the dry-wet spun membrane was washed in pressurized water at 121°C for 1 hour, and then heated in a constant temperature bath at 40°C for 8 hours, thereby obtaining a porous polyphenylsulfone hollow fiber membrane having an outer diameter of 1.0 mm, an inner diameter of 0.7 mm, and a pore diameter of 2.4 nm. The porous polyphenylsulfone hollow fiber membrane was used to produce a mini-module in the same manner as described above.

### Comparative Example 2

In the Example, the dry-wet spun membrane was crosslinked in a 0.1% ammonium persulfate aqueous solution at 121°C for 1 hour, and then heated in a constant temperature bath at 40°C for 8 hours, thereby obtaining a porous polyphenylsulfone hollow fiber membrane having an outer diameter of 1.0 mm, an inner diameter of 0.7 mm, and a pore diameter of 2.4 nm. The porous polyphenylsulfone hollow fiber membrane was used to produce a mini-module in the same manner as described above.

The membranes obtained in the Example and Comparative Example 1 were each left alone in a constant temperature bath heated to 130°C for 120 hours, and used to produce a mini-module in the same manner as described above. While supplying dry air at a temperature of 80°C and a relative humidity of 2% from one end of the hollow fiber membrane module to the hollow part of the hollow fiber membrane at a linear velocity of 13 m/s, water vapor at a temperature of 80°C and a relative humidity of 90 to 20% was supplied to the outer surface of the hollow fiber membrane at a linear velocity of 3 m/s, and the water vapor permeability coefficient was measured.

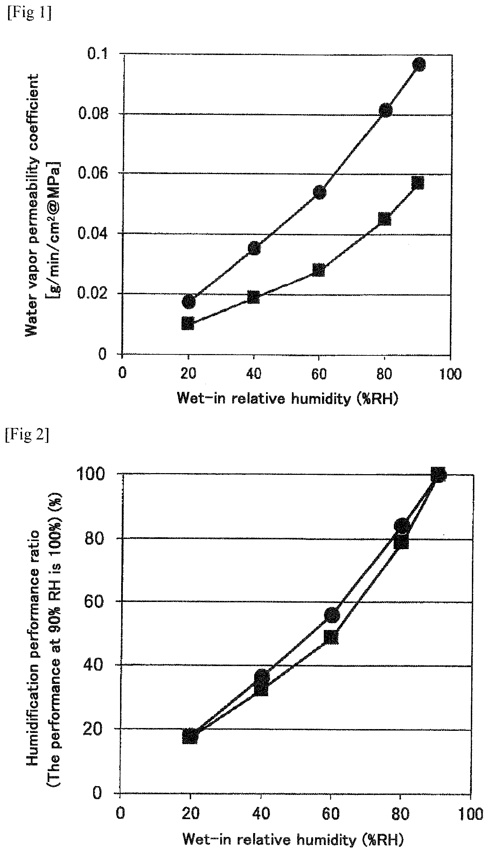

The obtained relationship between Wet-In relative humidity and water vapor permeability coefficient is shown in the following table and Fig. 1, which illustrates the table, and the relationship between Wet-In relative humidity and humidification performance ratio (ratio when the water vapor permeability coefficient at a relative humidity of 90% is 100%) is shown in the following table and Fig. 2, which illustrates the table.

**Table**

| Wet-In relative humidity | Example | | Comparative Example 1 | |
|---|---|---|---|---|
| | Water vapor permeability coefficient | Humidification performance ratio | Water vapor permeability coefficient | Humidification performance ratio |
| (%RH) | (g/min/cm²@ MPa) | (%) | (g/min/cm²@ MPa) | (%) |
| 90 | 0.0969 | 100.0 | 0.0570 | 100.0 |
| 80 | 0.0816 | 84.2 | 0.0450 | 79.0 |
| 60 | 0.0542 | 55.9 | 0.0279 | 48.9 |
| 40 | 0.0352 | 36.3 | 0.0185 | 32.4 |
| 20 | 0.0173 | 17.9 | 0.0099 | 17.4 |

Further, when the water vapor permeability coefficient at a relative humidity of 90% of a mini-module using a porous polyphenylsulfone hollow fiber membrane before heat treatment was 100%, the humidification performance at 130°C after 120 hours was 100% in the Example, and 85% relatively in Comparative Examples 1 and 2.

## Claims

1. A method for producing a polyphenylsulfone hollow fiber membrane for humidifying membranes, the method comprising subjecting a hollow fiber membrane to washing in pressurized water at 121°C for 1-5 hours followed by a crosslinking treatment of heating at 160 to 180°C for 5 to 12 hours, wherein the hollow fiber membrane is obtained by a wet spinning method or a dry-wet spinning method using a spinning dope comprising polyphenylsulfone, hydrophilic polyvinylpyrrolidone, and a water-soluble organic solvent solution.

## Patentansprüche

1. Verfahren zur Herstellung einer Polyphenylsulfon-Hohlfasermembran für Befeuchtungsmembranen, wobei das Verfahren das Waschen einer Hohlfasermembran in unter Druck stehendem Wasser bei 121°C für 1 bis 5 Stunden, gefolgt von einer Vernetzungsbehandlung durch Erhitzen auf 160 bis 180°C für 5 bis 12 Stunden, umfaßt, wobei die Hohlfasermembran durch ein Naßspinnverfahren oder ein Trocken-Naßspinnverfahren unter Verwendung einer Spinnlösung, die Polyphenylsulfon, hydrophiles Polyvinylpyrrolidon und eine wasserlösliche organische Lösungsmittel-Lösung umfaßt, erhalten wird.

## Revendications

1. Procédé de fabrication d'une membrane à fibres creuses en polyphénylsulfone pour membranes d'humidification, comprenant le lavage d'une membrane à fibres creuses dans de l'eau sous pression à 121°C pendant 1 à 5 heures, suivi d'un traitement de réticulation par chauffage à 160 à 180°C pendant 5 à 12 heures, la membrane à fibres creuses étant obtenue par un procédé de filage humide ou un procédé de filage sec-humide utilisant une pâte à filer comprenant du polyphénylsulfone, de la polyvinylpyrrolidone hydrophile et une solution de solvant organique soluble dans l'eau.
